# DEMANDE DE BREVET EUROPEEN

(11) **EP 3 671 769 A1**
(43) Date de publication de la demande: **24.06.2020**
(21) Numéro de dépôt: 19218497.6
(22) Date de dépôt: 20.12.2019
(51) Int. Cl.: H01B 7/29, H01B 3/44, C08L 23/14, C08K 5/13, C08K 5/3437, C08K 5/25, C08K 5/00, C08L 23/16, H01B 9/02

(54) **CÂBLE ÉLECTRIQUE AYANT UNE TENUE AU VIEILLISSEMENT EN TEMPÉRATURE AMÉLIORÉE**

(30) Priorité: 21.12.2018 FR 1873939
(71) Demandeur: Nexans, 92400 Courbevoie (FR)
(72) Inventeur: KOELBLIN, Christian, 01800 Meximieux (FR); MAUGIN, Melek, 69700 CHASSAGNY (FR); PEREGO, Gabriele, 20144 Milan (IT); ALCARAZ, Valéry, 69190 SAINT-FONS (FR)
(74) Mandataire: De Lamo Marin, Sandra

(57) **Abrégé**

L'invention concerne un câble électrique comprenant au moins une couche semi-conductrice obtenue à partir d'une composition polymère comprenant au moins un matériau polymère thermoplastique à base de polypropylène, au moins un premier antioxydant et au moins un désactivateur de métal.

## Description

L'invention concerne un câble électrique comprenant au moins une couche semi-conductrice obtenue à partir d'une composition polymère comprenant au moins un matériau polymère thermoplastique à base de polypropylène, au moins un premier antioxydant et au moins un désactivateur de métal.

L'invention s'applique typiquement mais non exclusivement aux câbles électriques destinés au transport d'énergie, notamment aux câbles d'énergie à moyenne tension (notamment de 6 à 45-60 kV) ou à haute tension (notamment supérieure à 60 kV, et pouvant aller jusqu'à 400 kV), qu'ils soient en courant continu ou alternatif, dans les domaines du transport d'électricité aérien, sous-marin, terrestre, ou encore de l'aéronautique. L'invention s'applique en particulier aux câbles électriques présentant une tenue au vieillissement en température améliorée.

Les propriétés mécaniques à des températures élevées d'une composition polymère à base de polymère(s) de propylène peuvent être altérées par la présence de charges conductrices telles que du noir de carbone, même en faibles quantités (e.g. 1-5% en poids de noir de carbone, par rapport au poids total de la composition). Par conséquent, l'utilisation de quantités plus importantes, notamment dans les couches semi-conductrices de câbles à base de polymère(s) de propylène pose des problèmes. Ce phénomène de dégradation de couches semi-conductrices à base de polymère(s) de propylène s'accroît lorsque les charges conductrices comprennent des impuretés chimiques puisqu'elles accélèrent la dégradation thermique. Par ailleurs, la stabilité thermique des polymères de propylène est limitée vis-à-vis de températures élevées telles que celles généralement utilisées dans les procédés de mise en forme, de sorte qu'il est recommandé de ne pas excéder des températures supérieures à 230°C environ. Toutefois, il est difficile de suivre de telles recommandations dans certaines configurations industrielles.

Il existe donc un besoin en compositions à base de polymère(s) de propylène pour couches semi-conductrices de câble ayant une stabilité thermique améliorée.

De EP1634896 A1 est connu une couche semi-conductrice pour câble électrique obtenue à partir d'une composition comprenant un copolymère d'éthylène et d'acrylate de butyle, du noir de carbone et un polymère du triméthyl-2,2,4-dihydro-1,2-quinoline en tant qu'antioxydant. Toutefois, cette composition n'est pas optimisée pour obtenir une bonne tenue au vieillissement en température. Par ailleurs, il est connu que les compositions à base de polymère(s) de propylène pour couches semi-conductrices de câble sont plus difficiles à stabiliser thermiquement que les compositions à base de polymère(s) d'éthylène.

Le but de la présente invention est par conséquent de pallier les inconvénients des techniques de l'art antérieur en proposant un câble électrique, notamment à moyenne ou haute tension, à base de polymère(s) de propylène, ledit câble présentant une tenue au vieillissement en température améliorée de façon significative, de préférence tout en garantissant de bonnes propriétés électriques.

Le but est atteint par l'invention qui va être décrite ci-après.

L'invention a pour premier objet un câble électrique comprenant au moins un élément électriquement conducteur allongé, et au moins une couche semi-conductrice entourant ledit élément électriquement conducteur allongé, caractérisé en ce que la couche semi-conductrice est obtenue à partir d'une composition polymère comprenant au moins un matériau polymère thermoplastique à base de polypropylène, au moins un premier antioxydant, et au moins un désactivateur de métal.

Ainsi, grâce à la présence d'au moins un premier antioxydant, et d'au moins un désactivateur de métal au sein d'une couche semi-conductrice à base de polypropylène d'un câble électrique, la tenue au vieillissement en température est améliorée de façon significative, de préférence tout en garantissant de bonnes propriétés électriques. Ainsi, le mélange d'au moins un premier antioxydant et d'au moins un désactivateur de métal protège la couche semi-conductrice à base de polypropylène.

### Le premier antioxydant

Le premier antioxydant peut être choisi parmi les phénols encombrés, les amines aromatiques, et les hétérocycliques aromatiques azotés, et de préférence parmi les phénols encombrés.

Les phénols encombrés sont généralement des phénols substitués en position ortho par un ou plusieurs groupements hydrocarbonés.

Les amines aromatiques comprennent généralement au moins une fonction amine relié à au moins un cycle aromatique tel qu'un phényle.

Les hétérocycliques aromatiques azotés comprennent généralement au moins un hétérocycle aromatique comprenant un ou plusieurs (e.g. deux) atomes d'azote dans l'hétérocycle aromatique.

La composition polymère peut comprendre au moins 0,3% en poids environ, de préférence au moins 0,5% en poids environ, et de façon particulièrement préférée au moins 0,75% en poids environ du premier antioxydant, par rapport au poids total de la composition polymère.

La composition polymère peut comprendre au plus 2,5% en poids environ, de préférence au plus 2,0% en poids environ, et de façon particulièrement préférée au plus 1,5% en poids environ du premier antioxydant, par rapport au poids total de la composition polymère.

En effet, une quantité supérieure à 2,5% peut induire l'apparition de phénomènes d'exsudation de l'antioxydant. En outre, des quantités élevées d'antioxydant peuvent augmenter le coût de production dudit câble.

À titre d'exemples de phénols encombrés, on peut citer le pentaérythritol tétrakis(3-(3,5-di-*tert*-butyl-4-hydroxyphényl)propionate) (Irganox® 1010), l'octadécyl 3-(3,5-di-*tert*-butyl-4-hydroxyphényl)propionate (Irganox® 1076), le 13,5-triméthyl-2,4,6-tris(3,5-di-*tert*-butyl-4-hydroxybenzyl)benzène (Irganox® 1330), le 4,6-bis (octylthiométhyl)-o-crésol (Irgastab® KV10 ou Irganox® 1520), le 2,2'-thiobis(6-*tert*-butyl-4-méthylphénol) (Irganox® 1081), le 2,2'-thiodiéthylène bis[3-(3,5-di-*tert*-butyl-4-hydroxyphényl) propionate] (Irganox® 1035), le 2,2'-méthylènebis(6-*tert-*butyl-4-méthylphénol) ou le tris (3,5-di-*tert*-butyl-4-hydroxybenzyl) isocyanurate (Irganox® 3114).

À titre d'exemples d'amines aromatiques, on peut citer les phénylène diamines (e.g. paraphénylène diamines telles que 1PPD ou 6PPD), les diphénylamine styrène, les diphénylamines, ou le 4-(1-méthyl-1-phényléthyl)-N-[4-(1-méthyl-1-phényléthyl)phényl]aniline (Naugard 445).

À titre d'exemples d'hétérocycliques aromatiques azotés, on peut citer les mercapto benzimidazoles ou les dérivés de la quinoline tels que les 2,2,4-triméthyl-1,2 dihydroquinolines polymérisées (TMQ), et de préférence les mercapto benzimidazoles.

Les TMQ peuvent avoir différents grades, à savoir :
- un grade dit « standard » avec un faible degré de polymérisation, c'est-à-dire avec un taux de monomère résiduel supérieur à 1% en poids et ayant une teneur en NaCl résiduelle pouvant aller de 100 ppm à plus de 800 ppm (parties par million massiques);
- un grade dit « à haut degré de polymérisation » avec un haut degré de polymérisation, c'est-à-dire avec un taux de monomère résiduel inférieur à 1% en poids et ayant une teneur en NaCl résiduelle pouvant aller de 100 ppm à plus de 800 ppm ;
- un grade dit « à faible teneur en sel résiduel » avec une teneur en NaCl résiduelle inférieure à 100 ppm.

### Le désactivateur de métal

Le désactivateur de métal est différent du premier antioxydant.

Le désactivateur de métal peut être choisi parmi les hétérocycles aromatiques azotés, et les composés aromatiques comprenant au moins une fonction -NH-C(=O)-, et de préférence parmi les composés aromatiques comprenant au moins une fonction -NH-C(=O)-. La présence de l'oxygène dans le désactivateur de métal est importante pour pouvoir immobiliser durablement les ions métalliques.

Le désactivateur de métal est de préférence différent d'une amine encombrée. En d'autres termes, le désactivateur de métal ne comprend pas de préférence un ou plusieurs groupements tétraméthylpipéridine.

À titre d'exemples d'hétérocycliques aromatiques azotés, on peut citer les dérivés de la quinoline tels que les 2,2,4-triméthyl-1,2 dihydroquinolines polymérisées (TMQ).

Les TMQ peuvent avoir différents grades, à savoir :
- un grade dit « standard » avec un faible degré de polymérisation, c'est-à-dire avec un taux de monomère résiduel supérieur à 1% en poids et ayant une teneur en NaCl résiduelle pouvant aller de 100 ppm à plus de 800 ppm (parties par million massiques) ;
- un grade dit « à haut degré de polymérisation » avec un haut degré de polymérisation, c'est-à-dire avec un taux de monomère résiduel inférieur à 1% en poids et ayant une teneur en NaCl résiduelle pouvant aller de 100 ppm à plus de 800 ppm ;
- un grade dit « à faible teneur en sel résiduel » avec une teneur en NaCl résiduelle inférieure à 100 ppm.

À titre d'exemples de composés aromatiques comprenant au moins une fonction -NH-C(=O)-, on peut citer ceux comprenant deux fonctions -NH-C(=O)-, de préférence comprenant deux fonctions -NH-C(=O)- liées de façon covalente, et de façon plus particulièrement préférée comprenant un groupe divalent -NH-C(=O)-C(=O)-NH- ou -C(=O)-NH-NH-C(=O)-, tels que le 2,2' oxamidobis-[éthyl-3-(3,5-di-tert-butyl-4-hydroxyphényl) propionate] (Naugard XL-1), le 2',3-bis[[3-[3,5-di-tert-butyl-4-hydroxy phenyl]propionyl]] propionohydrazide ou 1,2-bis(3,5-di-tert-butyl-4-hydroxyhydrocinnamoyl) hydrazine (Irganox® 1024 ou Irganox® MD 1024), ou l'oxalyl bis(benzylidenehydrazide) (OABH).

La composition polymère peut comprendre au moins 0,2% en poids environ, de préférence au moins 0,4% en poids environ, et de façon particulièrement préférée au moins 0,6% en poids environ du désactivateur de métal, par rapport au poids total de la composition polymère.

La composition polymère peut comprendre au plus 1,5% en poids environ, de préférence au plus 1,0% en poids environ, et de façon particulièrement préférée au plus 0,75% en poids environ du désactivateur de métal, par rapport au poids total de la composition polymère.

La combinaison d'un désactivateur de métal et d'un premier antioxydant permet d'obtenir une bonne stabilité thermique de la couche semi-conductrice à base de polypropylène.

La composition polymère comprend en particulier au moins une charge conductrice, notamment en quantité suffisante pour rendre la couche semi-conductrice.

Ainsi, le mélange d'au moins un premier antioxydant et d'au moins un désactivateur de métal protège la couche semi-conductrice à base de polypropylène malgré la présence de ladite ou des charge(s) conductrice(s) pouvant être comprise(s) dans ladite couche semi-conductrice.

La composition polymère peut comprendre au moins 6% en poids environ de charge conductrice, de préférence au moins 15% en poids environ de charge conductrice, et encore plus préférentiellement au moins 25% en poids environ de charge conductrice, par rapport au poids total de la composition polymère.

La composition polymère peut comprendre au plus 45% en poids environ de charge conductrice, et de préférence au plus 40% en poids environ de charge conductrice, par rapport au poids total de la composition polymère.

La charge conductrice est de préférence une charge électriquement conductrice.

La charge conductrice peut être choisie avantageusement parmi les noirs de carbone, les graphites, et un de leurs mélanges.

Le désactivateur de métal permet notamment de protéger la couche semi-conductrice contre les ions métalliques pouvant se trouver dans les charges conductrices sous la forme de traces, mais également dans l'élément électriquement conducteur allongé et/ou dans l'écran métallique du câble de l'invention.

### Le matériau polymère thermoplastique à base de polypropylène

Le matériau polymère thermoplastique à base de polypropylène peut comprendre un homopolymère ou un copolymère de propylène P₁, et de préférence un copolymère de propylène P₁.

L'homopolymère de propylène P₁ a de préférence un module élastique allant de 1250 à 1600 MPa environ.

L'homopolymère de propylène P₁ peut représenter au moins 10% en poids environ, et de préférence de 15 à 30% en poids environ, par rapport au poids total du matériau polymère thermoplastique à base de polypropylène.

À titre d'exemples de copolymères de propylène P₁, on peut citer les copolymères de propylène et d'oléfine, l'oléfine étant notamment choisie parmi l'éthylène et une oléfine α₁ différente du propylène.

L'éthylène ou l'oléfine α₁ différente du propylène du copolymère de propylène et d'oléfine représente de préférence au plus 15% en mole environ, et de préférence encore au plus 10% en mole environ, par rapport au nombre de moles total de copolymère de propylène et d'oléfine.

L'oléfine α₁ différente du propylène peut répondre à la formule CH₂=CH-R¹, dans laquelle R¹ est un groupe alkyle linéaire ou ramifié ayant de 2 à 12 atomes de carbone, notamment choisie parmi les oléfines α₁ suivantes: 1-butène, 1-pentène; 4-méthyl-1-pentène, 1-hexène, 1-octène, 1-décène, 1-dodécène, et un de leurs mélanges.

Les copolymères de propylène et d'éthylène sont préférés à titre de copolymères de propylène P₁.

Le copolymère de propylène P₁ peut être un copolymère statistique de propylène ou un copolymère de propylène hétérophasé.

Dans l'invention, le copolymère statistique de propylène P₁ a de préférence un module élastique allant de 600 à 1200 MPa environ.

À titre d'exemple de copolymère statistique de propylène, on peut citer celui commercialisé par la société Borealis sous la référence Bormed® RB 845 MO.

Le copolymère de propylène hétérophasé peut comprendre une phase thermoplastique de type propylène et une phase élastomère thermoplastique de type copolymère d'éthylène et d'une oléfine α₂.

L'oléfine α₂ de la phase élastomère thermoplastique du copolymère hétérophasé peut être le propylène.

La phase élastomère thermoplastique du copolymère hétérophasé peut représenter au moins 20% en poids environ, et de préférence au moins 45% en poids environ, par rapport au poids total du copolymère hétérophasé.

Le copolymère de propylène hétérophasé a de préférence un module élastique allant de 50 à 1200 MPa, et de façon particulièrement préférée : soit un module élastique allant de 50 à 550 MPa environ, et de façon plus particulièrement préférée allant de 50 à 250 MPa environ ; soit un module élastique allant de 600 à 1200 Mpa environ.

À titre d'exemple de copolymère hétérophasé, on peut mentionner le copolymère hétérophasé commercialisé par la société LyondellBasell sous la référence Adflex® Q 200 F, ou le copolymère hétérophasé commercialisé par la société LyondellBasell sous la référence EP®2967.

L'homopolymère ou le copolymère de propylène P₁ peut avoir une température de fusion supérieure à 110°C environ, de préférence supérieure à 130°C environ, de façon particulièrement préférée supérieure ou égale à 140°C environ, et de façon plus particulièrement préférée allant de 140 à 170°C environ.

L'homopolymère ou le copolymère de propylène P₁ peut avoir une enthalpie de fusion allant de 20 à 100 J/g environ.

En particulier, l'homopolymère de propylène P₁ a une enthalpie de fusion allant de 80 à 90 J/g environ.

Le copolymère statistique de propylène P₁ peut avoir une enthalpie de fusion allant de 40 à 80 J/g environ.

Le copolymère de propylène hétérophasé P₁ peut avoir une enthalpie de fusion allant de 20 à 50 J/g environ.

L'homopolymère ou le copolymère de propylène P₁ peut avoir un indice de fluidité allant de 0,5 à 3 g/10 min, mesuré à 230°C environ avec une charge de 2,16 kg environ selon la norme ASTM D1238-00.

Le copolymère statistique de propylène P₁ peut avoir un indice de fluidité allant de 1,2 à 2,5 g/10 min, et de préférence allant de 1,5 à 2,5 g/10 min, mesuré à 230°C environ avec une charge de 2,16 kg environ selon la norme ASTM D1238-00.

Le copolymère de propylène hétérophasé P₁ peut avoir un indice de fluidité allant de 0,5 à 1,5 g/10 min, et de préférence allant de 0,5 à 1,4 g/10 min, mesuré à 230°C environ avec une charge de 2,16 kg environ selon la norme ASTM D1238-00.

Le matériau polymère thermoplastique à base de polypropylène peut comprendre plusieurs polymères de propylène différents, comme par exemple plusieurs homopolymères de propylène P₁ différents, au moins un homopolymère de propylène P₁ et au moins un copolymère de propylène P₁, ou plusieurs copolymères de propylène P₁ différents.

Le matériau polymère thermoplastique à base de polypropylène comprend de préférence au moins 50% en poids environ, de préférence de 55 à 90% en poids environ, et de façon particulièrement préférée de 60 à 90% en poids environ, de polymère(s) de propylène, par rapport au poids total du matériau polymère thermoplastique à base de polypropylène.

Lorsque le matériau polymère thermoplastique à base de polypropylène comprend plusieurs copolymères de propylène P₁ différents, il comprend de préférence deux copolymères de propylène P₁ différents, lesdits copolymères de propylène P₁ étant tels que définis ci-dessus.

En particulier, le matériau polymère thermoplastique à base de polypropylène peut comprendre un copolymère statistique de propylène (en tant que premier copolymère de propylène P₁) et un copolymère de propylène hétérophasé (en tant que deuxième copolymère de propylène P₁), ou deux copolymères de propylène hétérophasés différents.

Lorsque le matériau polymère thermoplastique à base de polypropylène comprend un copolymère statistique de propylène et un copolymère de propylène hétérophasé, ledit copolymère de propylène hétérophasé a de préférence un module élastique allant de 600 à 1200 Mpa environ.

Selon une forme de réalisation de l'invention, les deux copolymères de propylène hétérophasés ont un module élastique différent. De préférence, le matériau polymère thermoplastique à base de polypropylène comprend un premier copolymère de propylène hétérophasé ayant un module élastique allant de 50 à 550 MPa environ, et de façon particulièrement préférée allant de 50 à 250 MPa environ ; et un deuxième copolymère de propylène hétérophasé ayant un module élastique allant de 600 à 1200 MPa environ.

Avantageusement, les premier et deuxième copolymères de propylène hétérophasés ont un indice de fluidité tel que défini dans l'invention.

Ces combinaisons de copolymères de propylène P₁ peuvent permettre avantageusement d'améliorer les propriétés mécaniques de la couche semi-conductrice. En particulier, la combinaison permet d'obtenir des propriétés mécaniques optimisées de la couche semi-conductrice, notamment en termes d'allongement à la rupture, et de flexibilité ; et/ou permet de former une couche semi-conductrice plus homogène, notamment favorise la dispersion du liquide diélectrique dans le matériau polymère thermoplastique à base de polypropylène de ladite couche semi-conductrice.

Selon une forme de réalisation préférée de l'invention, le copolymère de propylène P₁ ou les copolymères de propylène P₁ lorsqu'il y en a plusieurs, représente(nt) au moins 50% en poids environ, de préférence de 55 à 90% en poids environ, et de préférence encore de 60 à 90% en poids environ, par rapport au poids total du matériau polymère thermoplastique à base de polypropylène.

Le copolymère statistique de propylène P₁ peut représenter au moins 20% en poids environ, et de préférence de 30 à 70% en poids environ, par rapport au poids total du matériau polymère thermoplastique à base de polypropylène.

Le copolymère de propylène hétérophasé P₁, ou les copolymères de propylène hétérophasés P₁ lorsqu'il y en plusieurs, peu(ven)t représenter de 5 à 95% en poids environ, de préférence de 50 à 90% en poids environ, et de façon particulièrement préférée de 60 à 80% en poids environ, par rapport au poids total du matériau polymère thermoplastique à base de polypropylène.

Le matériau polymère thermoplastique à base de polypropylène peut comprendre en outre un homopolymère ou un copolymère d'oléfine P₂, l'oléfine étant notamment choisie parmi l'éthylène et une oléfine α₃ répondant à la formule CH₂=CH-R², dans laquelle R² est un groupe alkyle linéaire ou ramifié ayant de 1 à 12 atomes de carbone.

Ledit homopolymère ou un copolymère d'oléfine P₂ est de préférence différent dudit homopolymère ou copolymère de propylène P₁.

L'oléfine α₃ est de préférence choisie parmi les oléfines suivantes : propylène, 1-butène, isobutylène, 1-pentène, 4-méthyl-1-pentène, 1-hexène, 1-octène, 1-décène, 1-dodécène, et un de leurs mélanges.

L'oléfine α₃ de type propylène, 1-hexène ou 1-octène est particulièrement préférée.

Selon une forme de réalisation avantageuse de l'invention, R² est un groupe alkyle linéaire ou ramifié ayant de 2 à 8 atomes de carbone.

La combinaison de polymères P₁ et P₂ permet d'obtenir un matériau polymère thermoplastique présentant de bonnes propriétés mécaniques, notamment en termes de module élastique, et électriques.

L'homopolymère ou le copolymère d'oléfine P₂ est de préférence un polymère d'éthylène.

Le polymère d'éthylène peut être un polymère d'éthylène ou polyéthylène basse densité, un polyéthylène moyenne densité, ou un polyéthylène haute densité, et de préférence un polyéthylène linéaire basse densité ; notamment selon la norme ISO 1183A (à une température de 23°C).

Dans la présente invention, l'expression « basse densité » signifie ayant une densité allant de 0,91 à 0,925 environ, ladite densité étant mesurée selon la norme ISO 1183A (à une température de 23°C).

Dans la présente invention, l'expression « moyenne densité » signifie ayant une densité allant de 0,926 à 0,940 environ, ladite densité étant mesurée selon la norme ISO 1183A (à une température de 23°C).

Dans la présente invention, l'expression « haute densité » signifie ayant une densité allant de 0,941 à 0,965, ladite densité étant mesurée selon la norme ISO 1183A (à une température de 23°C).

Selon une forme de réalisation préférée de l'invention, l'homopolymère ou copolymère d'oléfine P₂ représente de 5 à 50% en poids environ, et de préférence encore de 10 à 40% en poids environ, par rapport au poids total du matériau polymère thermoplastique à base de polypropylène.

Selon une forme de réalisation particulièrement préférée de l'invention, le matériau polymère thermoplastique à base de polypropylène comprend deux copolymères de propylène P₁ tels qu'un copolymère statistique de propylène et un copolymère de propylène hétérophasé ou deux copolymères de propylène hétérophasés différents ; et un homopolymère ou copolymère d'oléfine P₂ tel qu'un polymère d'éthylène. Cette combinaison de copolymères de propylène P₁ et d'un homopolymère ou copolymère d'oléfine P₂ permet d'améliorer encore les propriétés mécaniques de la couche semi-conductrice, tout en garantissant une bonne conductivité thermique.

Le matériau polymère thermoplastique comprend de préférence au moins un polymère de propylène ayant une température Vicat d'au moins 90°C, de façon particulièrement préférée d'au moins 110°C, et de façon plus particulièrement préférée d'au moins 130°C. Ledit polymère de propylène ayant une telle température Vicat est de préférence le polymère majoritaire du matériau polymère thermoplastique.

Selon une forme de réalisation préférée, ledit polymère de propylène ayant une telle température Vicat est un copolymère de propylène statistique tel que défini dans l'invention.

Dans la présente invention, la température Vicat, ou en d'autres termes la température de ramollissement Vicat (bien connu sous l'anglicisme « *Vicat softening temperature* »), peut être facilement déterminée selon la norme ISO 306 Méthode A (2013).

Le matériau polymère thermoplastique de la composition polymère de la couche semi-conductrice du câble de l'invention est de préférence hétérophasé (i.e. il comprend plusieurs phases). La présence de plusieurs phases provient généralement du mélange de deux polyoléfines différentes, tel qu'un mélange de polymères de propylène différents ou un mélange d'un polymère de propylène et d'un polymère d'éthylène.

Le matériau polymère thermoplastique tel que défini dans l'invention représente le matériau polymère de la composition polymère de l'invention.

Le matériau thermoplastique à base de polypropylène comprend de préférence une quantité inférieure à 10% en poids environ de polymère(s) polaire(s), par rapport au poids total du matériau thermoplastique à base de polypropylène ; de façon particulièrement préférée une quantité inférieure à 5% en poids de polymère(s) polaire(s), par rapport au poids total du matériau thermoplastique à base de polypropylène ; et de façon plus particulièrement préférée ne comprend pas de polymère(s) polaire(s).

Dans la présente invention, l'expression « polaire » signifie un polymère comprenant des fonctions polaires, en particulier des groupements acétate, acrylate, hydroxyle, nitrile, carboxyle, carbonyle, éther, ester, ou tout autre groupement à caractère polaire bien connus dans l'art antérieur. Par exemple, un polymère polaire peut être un polymère choisi parmi les copolymères d'éthylène du type copolymère d'éthylène et d'acétate de vinyle (EVA), copolymère d'éthylène et de butyle acrylate (EBA), copolymère d'éthylène et d'éthyle acrylate (EEA), copolymère d'éthylène et d'acrylate de méthyle (EMA), ou copolymère d'éthylène et d'acide acrylique (EAA).

### Le liquide diélectrique

La composition polymère de l'invention peut comprendre en outre un liquide diélectrique, notamment formant un mélange intime avec le matériau polymère thermoplastique. La présence du liquide diélectrique permet d'obtenir de meilleures propriétés diélectriques (i.e. meilleure isolation électrique), et notamment une meilleure rigidité diélectrique de la couche obtenue à partir de la composition polymère. Elle peut également permettre d'améliorer les propriétés mécaniques et/ou la tenue au vieillissement de ladite couche.

À titre d'exemples de liquide diélectrique, on peut citer les huiles minérales (e.g. huiles naphténiques, huiles paraffiniques ou huiles aromatiques), les huiles végétales (e.g. huile de soja, huile de lin, huile de colza, huile de maïs ou huile de ricin) ou les huiles synthétiques telles que les hydrocarbures aromatiques (alkylbenzènes, alkylnaphtalènes, alkylbiphényles, alkydiaryléthylènes, etc...), les huiles de silicone, les éther-oxydes, les esters organiques ou les hydrocarbures aliphatiques.

Selon un mode de réalisation particulier, le liquide diélectrique représente de 1% à 20% en poids environ, de préférence de 2 à 15% en poids environ, et de préférence encore de 3 à 12% en poids environ, par rapport au poids total du matériau polymère thermoplastique.

Le liquide diélectrique peut comprendre une huile minérale et au moins un composé polaire de type benzophénone, acétophénone ou un de leurs dérivés.

Dans ce mode de réalisation, le liquide diélectrique peut comprendre au moins 70% en poids environ d'huile minérale, de préférence au moins 80% en poids environ d'huile minérale, et de façon particulièrement préférée au moins 90% en poids environ d'huile minérale par rapport au poids total du liquide diélectrique.

L'huile minérale est généralement liquide à 20-25°C environ.

L'huile minérale peut être choisie parmi les huiles naphténiques et les huiles paraffiniques.

L'huile minérale est obtenue à partir du raffinage d'un brut pétrolier.

Selon une forme de réalisation particulièrement préférée de l'invention, l'huile minérale comprend une teneur en carbone paraffinique (Cp) allant de 45 à 65% atomique environ, une teneur en carbone naphténique (Cn) allant de 35 à 55% atomique environ et une teneur en carbone aromatique (Ca) allant de 0,5 à 10% atomique environ.

Dans un mode de réalisation particulier, le composé polaire de type benzophénone, acétophénone ou un de leurs dérivés représente au moins 2,5% en poids environ, de préférence au moins 3,5% en poids environ, et encore plus préférentiellement au moins 4% en poids environ, par rapport au poids total du liquide diélectrique.

Selon une forme de réalisation préférée de l'invention, le composé polaire de type benzophénone, acétophénone ou un de leurs dérivés est choisi parmi la benzophénone, la dibenzosubérone, la fluorénone et l'anthrone. La benzophénone est particulièrement préférée.

### Deuxième antioxydant

La composition polymère peut comprendre en outre un deuxième antioxydant différent du premier antioxydant.

Le deuxième antioxydant peut être choisi parmi les antioxydants à base de soufre et les antioxydants à base de phosphore.

À titre d'exemples d'antioxydants à base de soufre, on peut citer les thioéthers tels que le didodécyl-3,3'-thiodipropionate (Irganox® PS800), le distéaryl thiodipropionate ou dioctadecyl-3,3'-thiodipropionate (Irganox® PS802), le bis[2-méthyle-4-{3-n-alkyle (C₁₂ ou C₁₄) thiopropionyloxy}-5-*tert-*butylphényl]sulfide, le thiobis-[2-*tert*-butyl-5-méthyle-4,1-phénylène] bis [3-(dodécylthio)propionate], ou le 4,6-bis(octylthiométhyle)-o-crésol (Irganox® 1520 ou Irgastab® KV10).

À titre d'exemples d'antioxydants à base de phosphore, on peut citer les phosphites ou les phosphonates, tels que le tris(2,4-di-*tert*-butyl-phényle)phosphite (Irgafos® 168) ou le bis(2,4-di-*tert-*butylphényl)pentaérythritol diphosphite (Ultranox® 626).

La composition polymère peut comprendre au moins 0,2% en poids environ, de préférence au moins 0,3% en poids environ, et de façon particulièrement préférée au moins 0,5% en poids environ du deuxième antioxydant, par rapport au poids total de la composition polymère.

La composition polymère peut comprendre au plus 2,0% en poids environ, de préférence au plus 1,5% en poids environ, et de façon particulièrement préférée au plus 1,0% en poids environ du deuxième antioxydant, par rapport au poids total de la composition polymère.

Selon une forme de réalisation particulièrement préférée de l'invention, le premier antioxydant, le deuxième antioxydant et le désactivateur de métal représentent au moins 0,6% en poids environ, de préférence au moins 0,9% en poids environ, et de façon particulièrement préférée au moins 1,2% en poids environ, par rapport au poids total de la composition polymère.

Selon une forme de réalisation particulièrement préférée de l'invention, le premier antioxydant, le deuxième antioxydant et le désactivateur de métal représentent au plus 2,5% en poids environ, de préférence au plus 2,0% en poids environ, et de façon particulièrement préférée au plus 1,5% en poids environ, par rapport au poids total de la composition polymère.

### Additifs

Le matériau polymère thermoplastique peut comprendre en outre un ou plusieurs additifs.

Les additifs sont bien connus de l'homme du métier et peuvent être choisis parmi des agents favorisant la mise en œuvre tels que des lubrifiants, des agents compatibilisants, ou des agents de couplage, des agents anti-UV , des composés réduisant les arborescences d'eau, des pigments, et un de leurs mélanges.

Le matériau polymère thermoplastique peut typiquement comprendre de 0,01 à 5% en poids environ, et de préférence de 0,1 à 2% en poids environ d'additifs, par rapport au poids total du matériau polymère thermoplastique.

La composition polymère de la couche semi-conductrice de l'invention est une composition polymère thermoplastique. Elle n'est donc pas réticulable.

En particulier, la composition polymère ne comprend pas d'agents de réticulation, d'agents de couplage de type silane, de peroxydes et/ou d'additifs qui permettent une réticulation. En effet de tels agents dégradent le matériau polymère thermoplastique à base de polypropylène.

La composition polymère est de préférence recyclable.

La composition peut comprendre en outre des charges inorganiques inertes telles que de la craie, un kaolin ou du talc ; et/ou des charges minérales sans halogènes destinées à améliorer le comportement au feu de la composition polymère.

Les charges inorganiques inertes et/ou les charges minérales sans halogènes peuvent représenter au plus 30% en poids environ, de préférence au plus 20% en poids environ, et de façon particulièrement préférée au plus 10% en poids environ, et de façon plus particulièrement préférée au plus 5% en poids environ, par rapport au poids total de la composition polymère.

Afin de garantir un câble électrique dit « HFFR » pour l'anglicisme « *Halogen Free Flame Retardant* », le câble de l'invention ne comprend préférentiellement pas de composés halogénés. Ces composés halogénés peuvent être de toutes natures, tels que par exemple des polymères fluorés ou des polymères chlorés comme le polychlorure de vinyle (PVC), des plastifiants halogénés, des charges minérales halogénées, ...etc.

La composition polymère peut être préparée en mélangeant le matériau polymère thermoplastique à base de polypropylène avec au moins un premier antioxydant tel que défini dans l'invention, un désactivateur de métal tel que défini dans l'invention, éventuellement un deuxième antioxydant tel que défini dans l'invention, éventuellement un liquide diélectrique et éventuellement un ou plusieurs additifs tels que définis dans l'invention.

### La couche semi-conductrice et le câble

La couche semi-conductrice du câble de l'invention est une couche non réticulée ou en d'autres termes une couche thermoplastique.

Dans l'invention, l'expression « couche non réticulée » ou « couche thermoplastique » signifie une couche dont le taux de gel selon la norme ASTM D2765-01 (extraction au xylène) est d'au plus 30% environ, de préférence d'au plus 20% environ, de façon particulièrement préférée d'au plus 10% environ, de façon plus particulièrement préférée d'au plus 5% environ, et de façon encore plus particulièrement préférée de 0%.

Dans un mode de réalisation de l'invention, la couche semi-conductrice, de préférence non réticulée, présente une résistance à la traction avant vieillissement en température d'au moins 12,5 MPa environ, de préférence d'au moins 15 MPa environ, et de façon particulièrement préférée d'au moins 20 MPa environ.

Dans un mode de réalisation de l'invention, la couche semi-conductrice, de préférence non réticulée, présente une résistance à la traction après vieillissement en température d'au moins 12,5 MPa environ, de préférence d'au moins 15 MPa environ, et de façon particulièrement préférée d'au moins 20 MPa environ.

La résistance à la traction est mesurée par un essai de traction sur éprouvette haltère H2, en particulier à une vitesse de traction de 25 mm/min.

Dans un mode de réalisation de l'invention, la couche semi-conductrice, de préférence non réticulée, présente une élongation à la rupture avant vieillissement en température d'au moins 150% environ, de préférence d'au moins 250% environ, et de façon particulièrement préférée d'au moins 350% environ.

Dans l'invention, le vieillissement en température est de préférence effectué à une température d'au moins 135°C, par exemple pendant 240 heures.

Dans un mode de réalisation de l'invention, la couche semi-conductrice, de préférence non réticulée, présente une élongation à la rupture après vieillissement en température d'au moins 150% environ, de préférence d'au moins 250% environ, et de façon particulièrement préférée d'au moins 350% environ.

L'élongation à la rupture est mesurée par un essai de traction sur éprouvette haltère H2, en particulier à une vitesse de traction de 25 mm/min.

Dans un mode de réalisation particulièrement préféré de l'invention, la couche semi-conductrice, de préférence non réticulée, présente une réduction de la résistance à la traction après vieillissement en température d'au plus 40% environ, de préférence d'au plus 30% environ, et de façon particulièrement préférée d'au plus 25% environ.

Dans un mode de réalisation particulièrement préféré de l'invention, la couche semi-conductrice, de préférence non réticulée, présente une réduction de l'élongation à la rupture après vieillissement en température d'au plus 50% environ, de préférence d'au plus 40% environ, et de façon particulièrement préférée d'au plus 30% environ.

La couche semi-conductrice du câble de l'invention est de préférence une couche recyclable.

La couche semi-conductrice de l'invention peut être une couche extrudée, notamment par des procédés bien connus de l'homme du métier.

La couche semi-conductrice présente une épaisseur variable en fonction du type de câble envisagé. En particulier, lorsque le câble conforme à l'invention est un câble à moyenne tension, l'épaisseur de la couche semi-conductrice est typiquement de 0,3 à 1,5 mm environ, et plus particulièrement de 0,5 mm environ. Lorsque le câble conforme à l'invention est un câble haute tension, l'épaisseur de la couche semi-conductrice varie typiquement de 1,0 à 4 mm (pour des tensions de l'ordre 150 kV environ) et pour aller jusqu'à des épaisseurs allant de 3 à 5 mm environ pour des tensions supérieures à 150 kV (câbles à très haute tension). Les épaisseurs précitées dépendent de la taille de l'élément électriquement conducteur allongé.

Dans la présente invention, on entend par « couche semi-conductrice » une couche dont la conductivité électrique peut être strictement supérieure à 1.10⁻⁸ S/m (Siemens par mètre), de préférence d'au moins 1.10⁻³ S/m, et de préférence peut être inférieure à 1.10³ S/m (mesurée à 25°C en courant continu).

La couche semi-conductrice de l'invention peut comprendre au moins un matériau polymère thermoplastique à base de polypropylène, au moins un premier antioxydant, au moins un désactivateur de métal, éventuellement un deuxième antioxydant, éventuellement un ou plusieurs additifs, et éventuellement au moins une charge conductrice, les ingrédients précités étant tels que définis dans l'invention.

Les proportions des différents ingrédients dans la couche semi-conductrice peuvent être identiques à celles telles que décrites dans l'invention pour ces mêmes ingrédients dans la composition polymère.

L'élément électriquement conducteur allongé peut être un conducteur monocorps tel que par exemple un fil métallique ou un conducteur multicorps tel qu'une pluralité de fils métalliques torsadés ou non.

L'élément électriquement conducteur allongé peut être en aluminium, en alliage d'aluminium, en cuivre, en alliage de cuivre, ou en une de leurs combinaisons.

Le câble peut comprendre en outre une couche électriquement isolante.

Dans la présente invention, on entend par « couche électriquement isolante » une couche dont la conductivité électrique peut être d'au plus 1.10⁻⁸ S/m (siemens par mètre), et de préférence d'au plus 1.10⁻¹⁰ S/m (siemens par mètre) (mesurée à 25°C en courant continu).

La couche électriquement isolante a plus particulièrement une conductivité électrique inférieure à celle de la couche semi-conductrice. Plus particulièrement, la conductivité électrique de la couche semi-conductrice peut être au moins 10 fois supérieure à la conductivité électrique de la couche électriquement isolante, de préférence au moins 100 fois supérieure à la conductivité électrique de la couche électriquement isolante, et de façon particulièrement préférée au moins 1000 fois supérieure à la conductivité électrique de la couche électriquement isolante.

La couche électriquement isolante de l'invention peut entourer l'élément électriquement conducteur allongé.

La couche semi-conductrice peut entourer la couche électriquement isolante. La couche semi-conductrice peut alors être une couche semi-conductrice externe.

La couche électriquement isolante peut entourer la couche semi-conductrice. La couche semi-conductrice peut alors être une couche semi-conductrice interne.

La couche électriquement isolante est de préférence en un matériau polymère thermoplastique, et de façon particulièrement préférée obtenue à partir d'une composition polymère comprenant au moins un matériau polymère thermoplastique à base de polypropylène tel que défini dans l'invention.

Selon une forme de réalisation préférée de l'invention, le câble électrique comprend plusieurs couches semi-conductrices entourant l'élément électriquement conducteur allongé, au moins l'une des couches semi-conductrices étant telle que définie dans l'invention (ou étant obtenue à partir d'une composition polymère telle que définie dans l'invention).

Selon une forme de réalisation particulièrement préférée de l'invention, le câble comprend :
- au moins un élément électriquement conducteur allongé, notamment positionné au centre du câble,
- une première couche semi-conductrice entourant l'élément électriquement conducteur allongé,
- une couche électriquement isolante entourant la première couche semi-conductrice, et
- une deuxième couche semi-conductrice entourant la couche électriquement isolante,
au moins l'une des couches semi-conductrices, et de préférence les deux couches semi-conductrices, étant telle(s) que définie(s) dans l'invention (ou étant obtenue(s) à partir d'une composition polymère telle que définie dans l'invention).

La couche électriquement isolante peut être telle que définie dans l'invention.

Dans un mode de réalisation particulier, la première couche semi-conductrice, la couche électriquement isolante et la deuxième couche semi-conductrice constituent une isolation tricouche. En d'autres termes, la couche électriquement isolante est en contact physique direct avec la première couche semi-conductrice, et la deuxième couche semi-conductrice est en contact physique direct avec la couche électriquement isolante.

Le câble peut comprendre en outre une gaine extérieure de protection entourant la deuxième couche semi-conductrice, et peut être en contact physique direct avec celle-ci.

La gaine extérieure de protection peut être une gaine électriquement isolante.

Le câble électrique peut comprendre en outre un écran électrique (e.g. métallique) entourant la deuxième couche semi-conductrice. Dans ce cas, la gaine électriquement isolante entoure ledit écran électrique et l'écran électrique est entre la gaine électriquement isolante et la deuxième couche semi-conductrice.

Cet écran métallique peut être un écran dit « filaire » composé d'un ensemble de conducteurs en cuivre ou en aluminium arrangé autour et le long de la deuxième couche semi-conductrice, un écran dit « rubané » composé d'un ou de plusieurs rubans métalliques conducteurs en cuivre ou en aluminium posé(s) éventuellement en hélice autour de la deuxième couche semi-conductrice ou un ruban métallique conducteur en aluminium posé longitudinalement autour de la deuxième couche semi-conductrice et rendu étanche grâce à de la colle dans les zones de chevauchement de parties dudit ruban, ou d'un écran dit « étanche » de type tube métallique composé éventuellement de plomb ou d'alliage de plomb et entourant la deuxième couche semi-conductrice. Ce dernier type d'écran permet notamment de faire barrière à l'humidité ayant tendance à pénétrer le câble électrique en direction radiale.

L'écran métallique du câble électrique de l'invention peut comprendre un écran dit « filaire » et un écran dit « étanche » ou un écran dit « filaire » et un écran dit « rubané ».

Tous les types d'écrans métalliques peuvent jouer le rôle de mise à la terre du câble électrique et peuvent ainsi transporter des courants de défaut, par exemple en cas de court-circuit dans le réseau concerné.

D'autres couches, telles que des couches gonflantes en présence d'humidité peuvent être ajoutées entre la deuxième couche semi-conductrice et l'écran métallique, ces couches permettant d'assurer l'étanchéité longitudinale du câble électrique à l'eau.

Le câble de l'invention concerne plus particulièrement le domaine des câbles électriques fonctionnant en courant continu (DC) ou en courant alternatif (AC).

Le câble électrique conforme au premier objet de l'invention peut être obtenu selon un procédé comprenant au moins une étape 1) d'extrusion de la composition polymère telle que définie dans le premier objet de l'invention autour d'un élément électriquement conducteur allongé, pour obtenir une couche semi-conductrice (extrudée) entourant ledit élément électriquement conducteur allongé.

L'étape 1) peut être réalisée par des techniques bien connues de l'homme du métier, par exemple à l'aide d'une extrudeuse.

Lors de l'étape 1), la composition en sortie d'extrudeuse est dite « non réticulée », la température ainsi que le temps de mise en œuvre au sein de l'extrudeuse étant optimisés en conséquence.

En sortie d'extrudeuse, on obtient donc une couche extrudée autour dudit élément électriquement conducteur, pouvant être ou non, directement en contact physique avec ledit élément électriquement conducteur allongé.

Le procédé ne comprend pas de préférence d'étape de réticulation de la couche obtenue à l'étape 1).

La couche électriquement isolante et/ou la ou les couche(s) semi-conductrice(s) du câble électrique de l'invention peuvent être obtenues par extrusion successive ou par co-extrusion.

Préalablement à l'extrusion de chacune de ces couches autour d'au moins un élément électriquement conducteur allongé, l'ensemble des constituants nécessaires à la formation de chacune de ces couches peut être dosé et mélangé dans un mélangeur en continu de type co-malaxeur BUSS, extrudeuse bi-vis ou un autre type de mélangeur approprié pour des mélanges polymères, notamment chargés. Le mélange peut être ensuite extrudé sous forme de joncs, puis refroidi et séché pour être mis sous forme de granulés, ou alors le mélange peut être mis directement sous forme de granulés, par des techniques bien connues de l'homme du métier. Ces granulés peuvent être ensuite introduits au sein d'une extrudeuse mono-vis afin d'extruder et de déposer la composition autour de l'élément électriquement conducteur allongé pour former la couche en question.

Les différentes compositions peuvent être extrudées les unes à la suite des autres pour entourer de façon successive l'élément électriquement conducteur allongé, et ainsi former les différentes couches du câble électrique de l'invention.

Elles peuvent alternativement être extrudées concomitamment par co-extrusion à l'aide d'une unique tête d'extrudeuse, la co-extrusion étant un procédé bien connu de l'homme du métier.

Que ce soit dans l'étape de formation des granulés ou dans l'étape d'extrusion sur câble, les conditions opératoires sont bien connues de l'homme du métier. Notamment, la température au sein du dispositif de mélange ou d'extrusion peut être supérieure à la température de fusion du polymère majoritaire ou du polymère ayant la température de fusion la plus élevée, parmi les polymères utilisés dans la composition à mettre en œuvre.

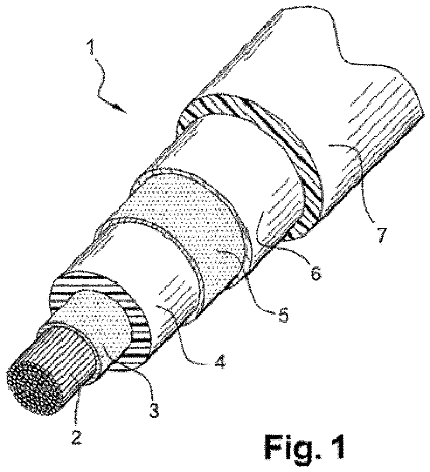

La figure 1 représente une vue schématique d'un câble électrique selon un mode de réalisation préféré conforme à l'invention.

Pour des raisons de clarté, seuls les éléments essentiels pour la compréhension de l'invention ont été représentés de manière schématique, et ceci sans respect de l'échelle.

Le câble électrique 1 à moyenne ou haute tension conforme au premier objet de l'invention, illustré dans la figure 1, comprend un élément électriquement conducteur 2 allongé central, notamment en cuivre ou en aluminium. Le câble électrique 1 comprend en outre plusieurs couches disposées successivement et coaxialement autour de cet élément électriquement conducteur allongé central 2, à savoir : une première couche 3 semi-conductrice dite « couche semi-conductrice interne », une couche 4 électriquement isolante, une deuxième couche 5 semi-conductrice dite « couche semi-conductrice externe », un écran métallique 6 de mise à la terre et/ou de protection, et une gaine extérieure de protection 7.

La couche électriquement isolante 4 est une couche extrudée thermoplastique (i.e. non réticulée).

Les couches semi-conductrices 3 et 5 sont des couches extrudées thermoplastiques (i.e. non réticulées) obtenues à partir de la composition polymère telle que définie dans l'invention.

La présence de l'écran métallique 6 et de la gaine extérieure de protection 7 est préférentielle, mais non essentielle, cette structure de câble étant en tant que telle bien connue de l'homme du métier.

### EXEMPLES

### 1. Compositions polymères

Des compositions **I1** et **I2** conformes à l'invention, i.e. comprenant au moins un matériau polymère thermoplastique à base de polypropylène, au moins un premier antioxydant, et au moins un désactivateur de métal, ont été comparées à des compositions **C1**, **C2** et **C3** comparatives, la composition **C1** correspondant à une composition comprenant un matériau polymère thermoplastique à base de polypropylène, mais ne comprenant pas de premier antioxydant, et de désactivateur de métal ; et les compositions **C2** et **C3** comprenant un matériau polymère thermoplastique à base de polypropylène et, un désactivateur de métal ou un premier antioxydant.

Le tableau 1 ci-dessous rassemble des compositions polymères précitées dont les quantités des composés sont exprimées en pourcentages en poids, par rapport au poids total de la composition polymère.

**TABLEAU 1**

| **Compositions polymères** | **C1 (*)** | **C2 (*)** | **C3 (*)** | **I1** | **I2** |
|---|---|---|---|---|---|
| copolymère statistique de propylène | 51,61 | 51,06 | 51,06 | 51,06 | 50,79 |
| copolymère de propylène hétérophasé | 10,75 | 10,64 | 10,64 | 10,64 | 10,58 |
| polyéthylène linéaire basse densité | 10,75 | 10,64 | 10,64 | 10,64 | 10,58 |
| charge conductrice | 26,89 | 26,60 | 26,60 | 26,60 | 26,46 |
| désactivateur de métal | 0,00 | 0,00 | 1,06 | 0,35 | 0,53 |
| premier antioxydant | 0,00 | 0,00 | 0,00 | 0,71 | 0,53 |
| deuxième antioxydant | 0,00 | 1,06 | 0,00 | 0,00 | 0,53 |

| | | | | | |
|---|---|---|---|---|---|
| (*) Compositions comparatives ne faisant pas partie de l'invention | | | | | |

L'origine des composés du tableau 1 est la suivante :
- copolymère statistique de propylène commercialisé par la société Borealis sous la référence Bormed RB 845 MO ;
- copolymère de propylène hétérophasé commercialisé par la société LyondellBasell Industries sous la référence Adflex® Q 200F ;
- polyéthylène linéaire basse densité commercialisé par la société ExxonMobil Chemicals sous la référence LLDPE 1002 YB ;
- charge conductrice : noir de carbone commercialisé par la société Cabot sous la référence Vulcan XC-500 ;
- désactivateur de métal: 1,2-bis(3,5-di-tert-butyl-4-hydroxyhydrocinnamoyl) hydrazine (Irganox® 1024 ou Irganox® MD 1024) commercialisé par la société BASF ;
- premier antioxydant : pentaérythritol tétrakis(3-(3,5-di-*tert*-butyl-4-hydroxyphényl)propionate) (Irganox® 1010) commercialisé par la société BASF ; et
- antioxydant ; et deuxième antioxydant: 2,2,4-triméthyl-1,2 dihydroquinoline polymérisée (TMQ) commercialisé par la société Addivant sous la référence Naugard Super Q pour la composition **C2** ; et tris(2,4-di-*tert*-butyl-phényle)phosphite (Irgafos® 168) commercialisé par la société BASF pour la composition **I2**.

### 2. Préparation des couches non réticulées et des câbles

Les compositions rassemblées dans le tableau 1 sont mises en œuvre comme suit.

Les constituants polymères permettant de former le matériau polymère thermoplastique à base de polypropylène tel que défini dans l'invention sont dosés pour chacune des compositions décrites ci-dessus par des doseurs à perte pondérale dans un mélangeur en continu. Les constituants polymères sont mis en fusion, puis la charge conductrice est ajoutée au mélange de constituants polymères en fusion. Le mélangeur continu peut être du type co-malaxeur oscillo-rotatif à simple vis (« BUSS »), une extrudeuse double vis, ou tout autre mélangeur permettant une bonne dispersion et distribution de la charge conductrice au sein du matériau polymère thermoplastique à base de polypropylène.

Le mélange résultant sous la forme fondu est ensuite extrudée sous forme de joncs, qui sont refroidis par exemple dans un bac de forme allongée contenant de l'eau froide. Les joncs, une fois refroidis, sont transformés en granulés.

Pour chacune des compositions **C2**, **C3**, **I1**, et **I2**, les granulés obtenus précédemment sont ensuite introduits dans une extrudeuse mono-vis équipée d'un doseur à perte pondérale pour les doser ; et d'un doseur à perte pondérale à très haute précision pour doser le premier antioxydant, le deuxième antioxydant, et/ou le désactivateur de métal. Les différents constituants sont mis en fusion, puis le mélange résultant sous la forme fondu est extrudé sous forme de joncs, qui sont refroidis. Les joncs, une fois refroidis, sont transformés en granulés.

Ces granulés pour chacune des compositions **C1**, **C2**, **C3**, **I1**, et **I2** peuvent ensuite être transformés en plaques moulées par compression à l'aide d'un moule approprié et d'une presse hydraulique chauffante, ou transformés en bandes au moyen d'une extrudeuse mono-vis, typiquement d'une épaisseur d'environ 1 mm, et d'une largeur d'environ 15 mm. Une fois refroidies, lesdites bandes peuvent servir à la découpe d'éprouvettes haltères de type H2 à l'aide d'un emporte-pièce. Les éprouvettes haltères servent ensuite à tester les propriétés mécaniques, à l'aide d'une machine à traction bien connu dans l'art antérieur, des compositions telles que décrites ci-dessus à l'état initial, ou après un vieillissement thermique à l'air, par exemple dans une étuve. Chaque résultat représente la valeur moyenne d'au moins 5 résultats individuels venant chacun d'une éprouvette H2 testée. La vitesse de traction lors des essais mécaniques est de 25 mm/minute.

Les conditions de vieillissement thermique choisies sont les suivantes : durée de 240 heures environ (10 jours), et température isotherme et constate de 135°C environ.

Les tests de résistance à la traction (RT) et d'élongation à la rupture (ER) ont été effectués sur les matériaux selon la Norme NF EN 60811-1-1, à l'aide d'un appareil commercialisé sous la référence 3345 par la société Instron.

Les résultats correspondant à chacun de ces tests sont reportés dans le tableau 2 (propriétés mécaniques) ci-dessous :

**TABLEAU 2**

| **Propriétés** | **C1 (*)** | **C2 (*)** | **C3 (*)** | **I1** | **I2** |
|---|---|---|---|---|---|
| RT (MPa) | 21,7 | 21,4 | 22,0 | 22,0 | 20,1 |
| ER (%) | 421 | 449,5 | 435,6 | 417,4 | 411,5 |
| RT après vieillissement (MPa) | 6,4 | 15,8 | 18,3 | 16,9 | 14,7 |
| ER après vieillissement (%) | 6,7 | 160,3 | 126,1 | 287,5 | 277,6 |

| | | | | | |
|---|---|---|---|---|---|
| (*) Compositions comparatives ne faisant pas partie de l'invention | | | | | |

L'ensemble de ces résultats montre que la présence d'un premier antioxydant et d'un désactivateur de métal dans une couche semi-conductrice à base de polypropylène permet d'améliorer la tenue au vieillissement en température. Sans cette combinaison d'un premier antioxydant et d'un désactivateur de métal, la résistance à la traction et l'élongation à la rupture chutent lors d'un vieillissement thermique.

## Revendications

1. Câble électrique (1) comprenant au moins un élément électriquement conducteur allongé (2), et au moins une couche semi-conductrice (3, 5) entourant ledit élément électriquement conducteur allongé (2), **caractérisé en ce que** la couche semi-conductrice (3, 5) est obtenue à partir d'une composition polymère comprenant au moins un matériau polymère thermoplastique à base de polypropylène, au moins un premier antioxydant, et au moins un désactivateur de métal, et **en ce que** la composition polymère comprend en outre un liquide diélectrique.

2. Câble électrique (1) selon la revendication 1, **caractérisé en ce que** le premier antioxydant est choisi parmi les phénols encombrés, les amines aromatiques, et les hétérocycliques aromatiques azotés.

3. Câble électrique (1) selon la revendication 1 ou 2, **caractérisé en ce que** la composition polymère comprend au moins 0,3% en poids du premier antioxydant, par rapport au poids total de la composition polymère.

4. Câble électrique (1) selon l'une quelconque des revendications précédentes, **caractérisé en ce que** le désactivateur de métal est choisi parmi les hétérocycles aromatiques azotés, et les composés aromatiques comprenant au moins une fonction -NH-C(=O)-.

5. Câble électrique (1) selon l'une quelconque des revendications précédentes, **caractérisé en ce que** la composition polymère comprend au moins 0,2% en poids du désactivateur de métal, par rapport au poids total de la composition polymère.

6. Câble électrique (1) selon l'une quelconque des revendications précédentes, **caractérisé en ce que** la composition polymère comprend au moins 6% en poids de charge conductrice, par rapport au poids total de la composition polymère.

7. Câble électrique (1) selon l'une quelconque des revendications précédentes, **caractérisé en ce que** le matériau polymère thermoplastique à base de polypropylène comprend un copolymère de propylène P₁.

8. Câble électrique (1) selon la revendication 7, **caractérisé en ce que** le matériau polymère thermoplastique à base de polypropylène comprend un copolymère statistique de propylène ou un copolymère de propylène hétérophasé, en tant que copolymère de propylène P₁.

9. Câble électrique (1) selon l'une quelconque des revendications précédentes, **caractérisé en ce que** le matériau polymère thermoplastique à base de polypropylène comprend un copolymère statistique de propylène et un copolymère de propylène hétérophasé, ou deux copolymères de propylène hétérophasés différents.

10. Câble électrique (1) selon l'une quelconque des revendications précédentes, **caractérisé en ce que** le matériau polymère thermoplastique à base de polypropylène peut comprendre en outre un homopolymère ou un copolymère d'oléfine P₂.

11. Câble électrique (1) selon l'une quelconque des revendications précédentes, **caractérisé en ce que** le matériau polymère thermoplastique à base de polypropylène comprend au moins 50% en poids de polymère(s) de propylène, par rapport au poids total du matériau polymère thermoplastique à base de polypropylène.

12. Câble électrique (1) selon l'une quelconque des revendications précédentes, **caractérisé en ce que** la composition polymère comprend en outre un deuxième antioxydant différent du premier antioxydant.

13. Câble électrique (1) selon la revendication 12, **caractérisé en ce que** la composition polymère comprend au moins 0,2% en poids du deuxième antioxydant, par rapport au poids total de la composition polymère.

14. Câble électrique (1) selon l'une quelconque des revendications précédentes, **caractérisé en ce que** la couche semi-conductrice (3, 5) présente une réduction de la résistance à la traction après vieillissement en température d'au plus 40%.

15. Câble électrique (1) selon l'une quelconque des revendications précédentes, **caractérisé en ce que** la couche semi-conductrice (3, 5) présente une réduction de l'élongation à la rupture après vieillissement en température d'au plus 50%.

16. Câble électrique (1) selon l'une quelconque des revendications précédentes, **caractérisé en ce que** la couche semi-conductrice (3, 5) est une couche non réticulée.

17. Câble électrique (1) selon l'une quelconque des revendications précédentes, **caractérisé en ce qu'**il comprend en outre une couche électriquement isolante (4).
